Europäisches Patentamt

(19) European Patent Office

Office européen des brevets

(11) Publication number: **0 117 121**
**A2**

(12) # EUROPEAN PATENT APPLICATION

(21) Application number: **84300959.8**

(22) Date of filing: **15.02.84**

(51) Int. Cl.³: **H 03 J 9/06**

(30) Priority: **18.02.83 GB 8304520**

(43) Date of publication of application:
**29.08.84 Bulletin 84/35**

(84) Designated Contracting States:
**DE GB NL**

(71) Applicant: **REDIFFUSION CONSUMER
MANUFACTURING LIMITED
Fullers Way South
Chessington Surrey(GB)**

(72) Inventor: **Bennett, Christopher Charles
30 Bradstock Road Stoneleigh
Epsom Surrey(GB)**

(72) Inventor: **Dibsdall, Michael John
28 Court Farm Avenue Ewell
Epsom Surrey(GB)**

(72) Inventor: **Corcoran, Paul John
17 First Avenue
East Molesey Surrey(GB)**

(72) Inventor: **Dowsett, Christopher
32 Lower Road Fetcham
Leatherhead Surrey(GB)**

(74) Representative: **Allman, Peter John et al,
WHEATLEY & MACKENZIE Scottish Life House Bridge
Street
Manchester M3 3DP(GB)**

(54) **Remote control system.**

(57) A remote control system comprising a handset which may be manipulated to transmit control signals, and at least two controlled devices each comprising a control signal detector to which the respective controlled device is responsive, each control signal detector being responsive to a different control signal format from the other detector or detectors. The handset comprises a memory in which data is stored from which control signals in each of the different formats can be generated, and a processor which is selectively controllable by manipulation of the handset to generate control signals from the stored data in any one of the different signal formats.

FIG. I

Croydon Printing Company Ltd.

1.

REMOTE CONTROL SYSTEM

The present invention relates to a remote control system.

Remote control systems are widely used for controlling for example television receivers. Generally such systems comprise a battery powered handset provided with buttons the manipulation of which energises a light emitting diode to transmit control signals to the controlled device, and a detector mounted on the controlled device to detect the control signals and control the device accordingly.

Heretofore each controlled device has a detector/handset arrangement dedicated to the control of one device, a variety of control signal formats being used by different manufacturers. As the use of remote control devices becomes more widespread, the provision of a separate handset for each item of controlled equipment becomes a problem. For example, cable television systems are now being proposed to which a subscriber can connect previously obtained receiving equipment. The selection of programmes requires control signals to which the cable system is responsive to supply selected programme signals to the receiver, whereas the control of for example the volume of a received programme requires control

2.

signals to which the receiver is responsive.
This dual requirement could be met by a single
complex handset specifically designed to be
compatible with the system and the receiver, or
by the use of two handsets.  The former
possibility is unacceptable because of cost
considerations, particularly bearing in mind that
a separate handset would be required to deal with
each type of receiver (assuming a common cable
system), and the latter possibility is undesirable
because of the inconvenience of using two handsets
to control what to the subscriber is a single
item of equipment.

It is an object of the present invention to
provide an improved remote control system.

According to the present invention , there
is provided a remote control system comprising
a handset which may be manipulated to transmit
control signals, and at least two controlled
devices each comprising a control signal detector
to which the respective controlled device is
responsive, each control signal detector being
responsive to a different control signal format
from the other detector or detectors, wherein the
handset comprises a memory in which data is
stored from which control signals in each of the
different formats can be generated, and a

3.

processor which is selectively controllable by manipulation of the handset to generate control signals from the stored data in any one of the different signal formats.

The invention also provides a handset for use in the above system.

By providing a handset which can store data appropriate to a wide range of control signal formats a system can be supplied at reasonable cost that enables the control of a wide range of equipment using a single handset. After a consumers requirements have been assessed, he can be provided with a handset the characteristics of which are tailored to those requirements.

The system of the invention is thus applicable in a wide range of domestic, commercial and industrial circumstances.

An embodiment of the invention will now be described, by way of example, with reference to the accompanying drawings, in which:

Fig. 1 is a schematic block diagram of a control signal transmitter embodying the present invention; and

Fig. 2 is a diagram illustrating the layout of one possible circuit for implementing the arrangement of Fig. 1.

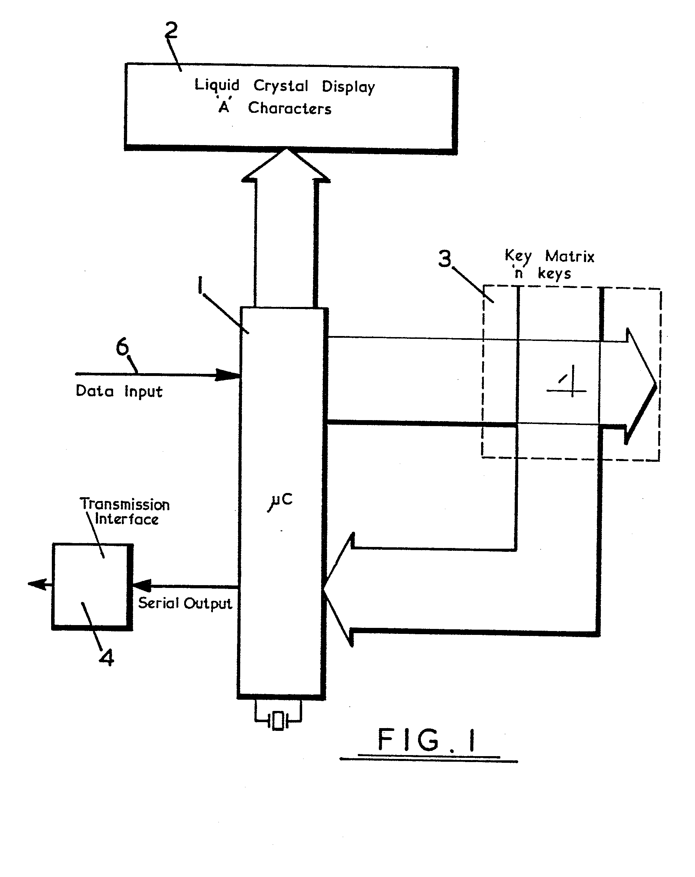

Referring to Fig. 1, a microcomputer 1

4.

provides outputs to a liquid crystal display 2 and a keyboard matrix 3. The keyboard 3 returns data to the microcomputer 1 which provides a serial output to a transmission interface 4 driving a transmission medium such as an LED.

The microcomputer comprises a memory storing data received via input 6. The stored data enables the computer to assemble control signals having a format appropriate to devices to be controlled and provides logical functions to ease the operation of the device from a user view-point.

Assuming the device is to control a television receiver and to control the supply of television signals to the receiver from a cable system it will comprise a series of numbered keys, depression of which selects a given channel and a series of keys which control functions of the receiver. When the keys are depressed to select a particular channel, the selected channel number is displayed and control signals are transmitted in a format appropriate to control of the cable system, the format being determined by stored data. Likewise, if the keys are depressed to select a particular control function of the receiver, a different format of control signal is generated in

5.

accordance with a different portion of the stored data. By storing appropriate format data in the microcomputer, a wide range of different devices can be remotely controlled using the single keypad.

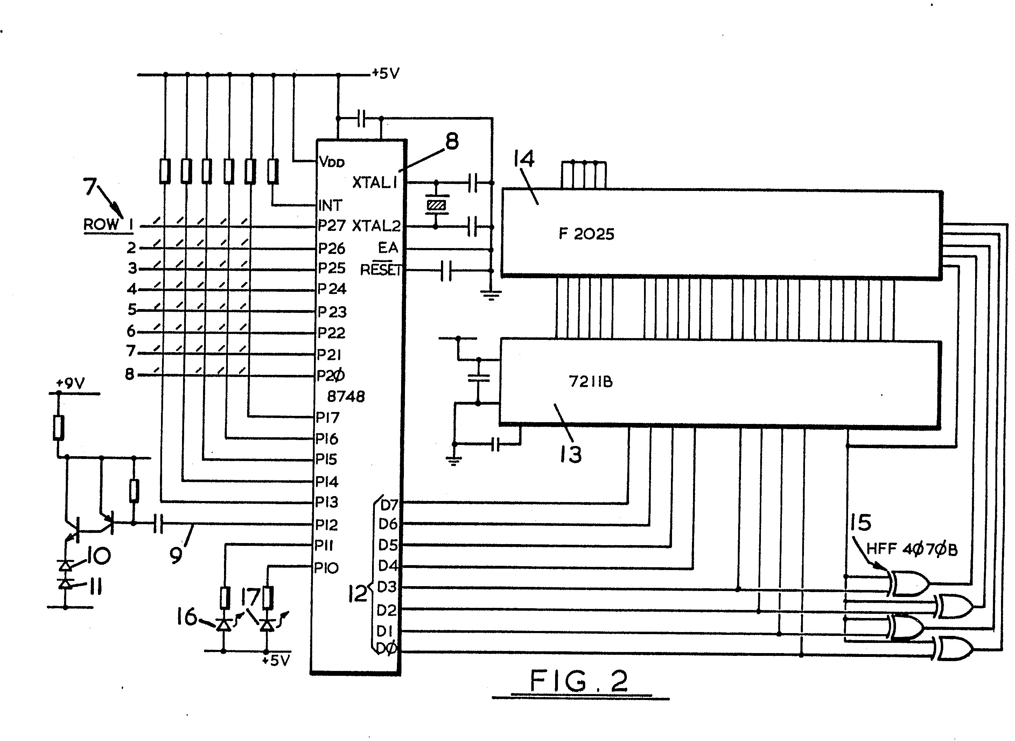

Referring now to Fig. 2, a keypad matrix 7 may be manipulated by the user to supply predetermined sets of instructions to an 8748 processor 8, the keypad being scanned by the processor at a rate determined by processor software. A serial output appropriate to the key or keys that have been depressed is applied via output 9 to a pair of infra-red transmitting diodes 10 and 11.

Eight output lines 12 are used to control a liquid crystal display driver 13 (type 7211B) which in turn controls the four digits of a display 14(type F2025).

Additional LCD arrow indicators are driven by a quad. EXCLUSIVE OR gate 15(type HEF 4070B). Two light emitting diodes 16,17 provide indications of the transmit function selected, e.g. "Cable" or "receiver". The user thus has a clear indication of all the control functions which he has selected.

It will be appreciated the processor 8 comprises a memory in which it is necessary to store data related to appropriate signal formats and to the processing of that data in response to

6.

operation of the keypad in a way which is easily understandable to the system user.  The techniques required to achieve this are however known to persons skilled in the application of microprocessors.

Although the embodiment of the invention described above is concerned with controlling a television receiver and a cable system to which that receiver is connected, a wide variety of other devices can be controlled, e.g. VCR's, Hi-Fi, heating, lighting etc.  Furthermore, a variety of signal transmitting devices other than infra-red devices can be controlled, e.g. ultrasonic, radio, or combinations thereof.

7.

CLAIMS

1. A remote control system comprising a handset which may be manipulated to transmit control signals, and at least two controlled devices each comprising a control signal detector to which the respective controlled device is responsive, each control signal detector being responsive to a different control signal format from the other detector or detectors, wherein the handset comprises a memory in which data is stored from which control signals in each of the different formats can be generated, and a processor which is selectively controllable by manipulation of the handset to generate control signals from the stored data in any one of the different signal formats.

2. A handset for use in a remote control system comprising at least two controlled devices each comprising a control signal detector to which the respective controlled device is responsive, each control signal detector being responsive to a different control signal format from the other detector or detectors, wherein the handset comprises a memory in which data is stored from which control signals in each of the differnt formats can be generated, and a processor which is selectively controllable by manipulation of the handset to generate control signals from the stored data in

8.

any one of the different signal formats.

3.    A remote control system substantially as hereinbefore described with reference to the accompanying drawings.

4.    A handset for use in a remote control system substantially as hereinbefore described with reference to the accompanying drawings.

FIG. 1

FIG. 2